# EUROPEAN PATENT SPECIFICATION

(11) **EP 0 829 670 B1**
(45) Date of publication and mention of the grant of the patent: **11.09.2002**
(21) Application number: 97850003.1
(22) Date of filing: 10.01.1997
(51) Int. Cl.: F16L 33/24

(54) **Hose coupler**
Schlauchverbindung
Raccord de tuyaux souples

(30) Priority: 17.09.1996 US 719090
(43) Date of publication of application: 18.03.1998
(73) Proprietor: NORTON PERFORMANCE PLASTICS CORPORATION, Wayne, New Jersey 07470 (US)
(72) Inventor: Zornow, Jeffrey S., Centerville, Ohio 45458 (US)
(74) Representative: DIEHL GLAESER HILTL & PARTNER

(56) References cited:
- FR-A- 1 043 634
- FR-A- 1 052 094
- FR-A- 1 208 594
- GB-A- 715 527
- GB-A- 844 498
- US-A- 2 452 908
- US-A- 5 240 291
- US-A- 5 393 104
- SASS ET AL: "Dubbel's Taschenbuch für den Maschinenbau" 1955 , SPRINGER-VERLAG , BERLIN XP002051543 * page 605, line 1 - line 2 *

## Description

This invention relates to a hose coupler and, more particularly, to an improved hose coupler for use in the sanitary industry which attaches to a nonmetallic flexible hose in a manner to provide a sealed conduit which has anti-galling characteristics and is not susceptible to bacteria or other contaminants at the coupler connection. In the area of consumable bulk liquids, such as milk, consumable bulk powders and granular materials, such as dry powder milk, there exist many types of hose couplers and hose, wherein a particular hose coupler has been found to be better suited for use with a hose used in the sanitary transport of a particular material.

In the recent past, the inventor developed reusable couplers for sanitary transportation. Such couplers include a male and female coupler piece which are threaded together at one end and radially spaced from one another at another end to receive an end of the hose therebetween. One design has at least one of the opposing faces of the radially spaced surfaces of the ends of the coupling including a continuous barb thread which is believed to be useful for retaining rubber hose as shown in U.S. Patent 5,240,291. Another design includes a plurality of raised pad surfaces of a predetermined geometric design believed to be useful for retaining flexible nonmetallic polymer hose (non-rubber) as shown in U.S. Patent 5,393,104.

FR-A-1 208 594 and FR-A-1 043 634 disclose a coupler comprising a hollow female coupler piece, an intermediate connector piece and a hollow male coupler piece, wherein the intermediale connector piece interconnects the male coupler piece and the female coupler.

A problem which has been discovered in using such couplers is the galling between the male and female coupler pieces which occurs in many instances during high pressure and heat Galling damages the mating threads and prevents the couplings from being reused. Typically this problem has been solved by applying anti-galling compounds between the mating threads. However sanitary regulations do not permit the use of anti-galling compounds on couplings used in the sanitary industry. Accordingly, the need arises to produce a coupling of the reusable type which is not subject to galling while retaining the desirable benefits of providing a substantially sanitary seal with a nonmetallic hose.

It is an object of the present invention to improve reusable sanitary couplers.

It is another object to prevent galling in reusable sanitary couplers.

It is another object to improve reusable couplers for flexible rubber and nonmetallic polymer hose which maintains sanitary seal when assembled.

It is another object of the present invention to provide an improved coupler which is readily assembled and disassembled from an unthreaded flexible hose with minimal detrimental effect to the hose.

It is still another object of the present invention to maintain visibly inspectable sanitary seal of a coupler to allow easy inspection without the need of disassembling the same.

Subject matter of the present invention is a coupler for a flexible non-metallic hose for sanitary use as defined in claim 1. Claims 2 to 9 relate to preferred embodiments thereof.

The present invention is directed to a coupling for use with sanitary hose, including a hollow female coupler piece made from a first material composition, an intermediate connector piece made from a second material composition and a hollow male coupler piece made from a third material composition, wherein the intermediate connector piece interconnects the male coupler piece and the female coupler piece. A first end of the male coupler piece extends into a first end of the female coupler piece such that opposing surfaces of the first ends are radially spaced defining an opening therebetween to receive an end of the hose, and wherein one of the surfaces of the first ends includes a retaining surface, such as a threaded barb surface or a plurality of raised pad surfaces of a predetermined geometric design.

The female coupler piece has a second end having an inner threaded surface portion. The male coupler piece has a second end having an outer threaded surface portion. The intermediate connector has an outer threaded surface portion complementary to the inner threaded surface portion of the second end of the female coupler piece and an inner threaded surface portion complementary to the outer threaded surface portion of the male coupler piece.

The second end of the male coupler piece has a radially outwardly extending shoulder. The coupler also includes means for sealing between the shoulder and one or both of the intermediate and the second end of the female coupler piece when the male coupler piece is threadedly interconnected to the female coupler piece via the intermediate connector. The means for sealing includes an O-ring. Either the second end of the female coupler piece, the intermediate piece or a combination thereof includes an annular groove defined therein to receive the O-ring.

The first end of the male coupler piece has a portion of its outer surface diameter slightly greater than an inner surface diameter of the hose to cause the hose to radially expand when inserted therein. Thus, when the coupling is assembled, the hose is retained in place between an outer surface of the first end of the male coupler piece and an inner surface of the first end of the female coupler piece by virtue of the outer surface of the hose conforming to the retaining inner surface.

Examples of possible embodiments of the invention will be described in detail with reference to the drawings in which:

FIG. 1 is an assembled central longitudinal section through one embodiment of the coupler according to the invention.

FIG. 2 is an exploded side view of the coupler shown in figure 1.

FIG 3 is an exploded perspective view of the coupler shown in figure 1.

FIG. 4 is an assembled central longitudinal section through a second embodiment of the coupler according to the invention.

FIG. 5 is an assembled central longitudinal section through a third embodiment of the coupler according to the invention.

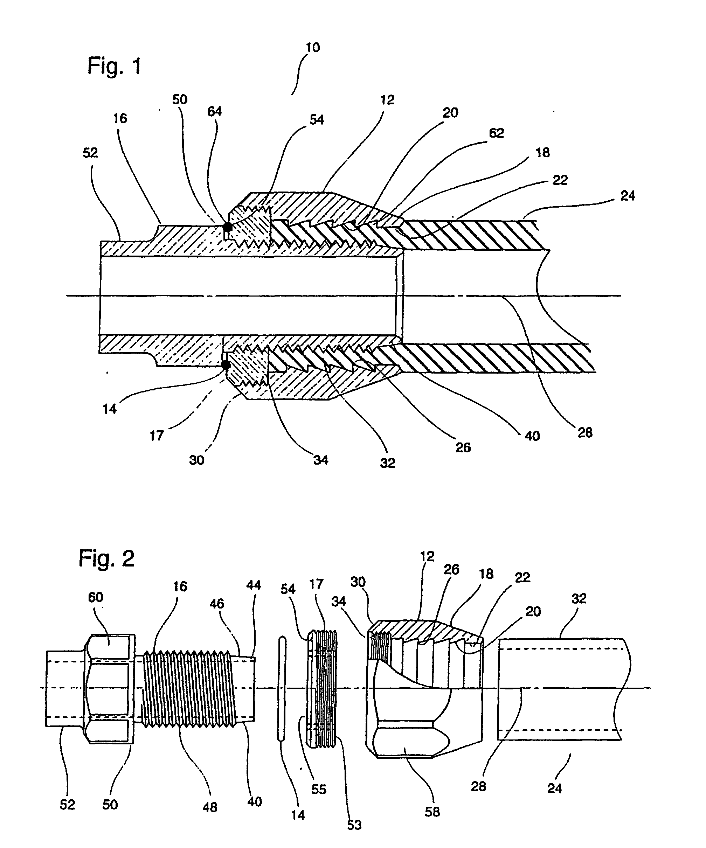

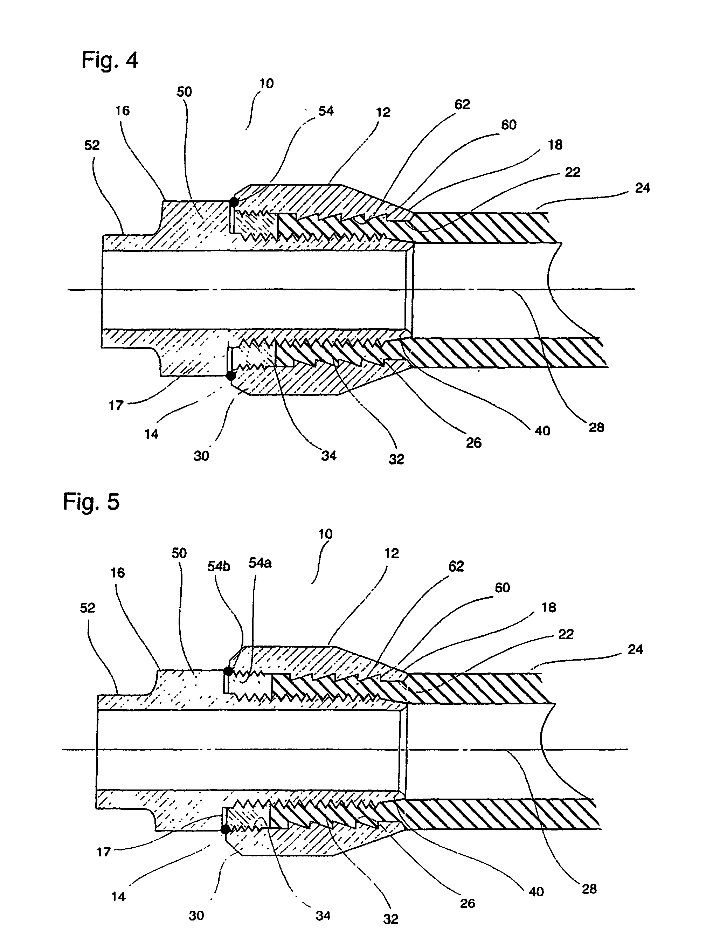

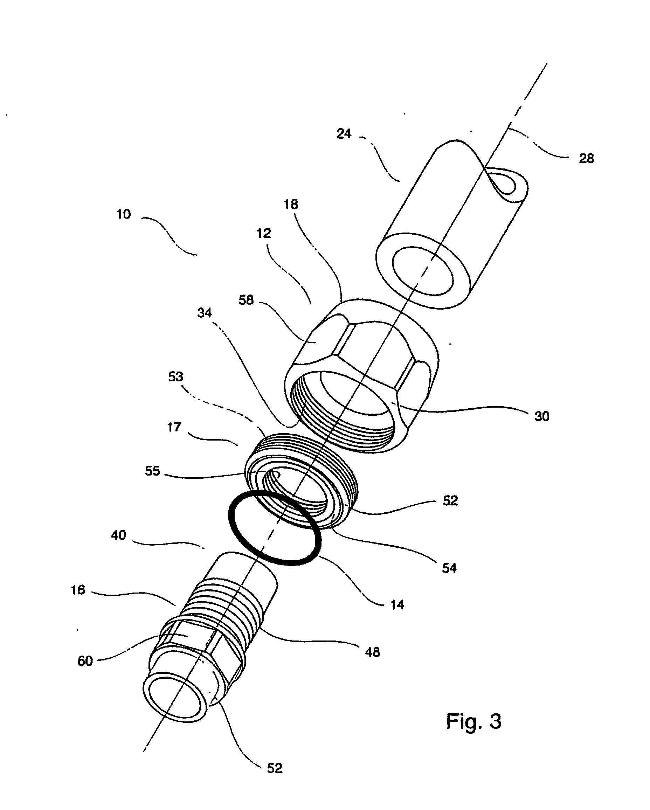

Referring to the drawings, a sanitary coupler 10 is provided with a generally cylindrical female coupler piece 12, an O-ring 14, and a male coupler piece 16 and intermediate connector 17. FIG. 1 shows the coupler in its assembled state, whereas FIG. 2 and FIG. 3 shows each of the pieces in a separated state. FIGS. 4 and 5 show alternative embodiments of the present invention.

As seen in FIG. 2, the female coupler piece 12 is preferably made of a stainless steel material and has within a first end 18 a retaining surface 20 (here a continuous threaded edge 26 as described in U.S. Patent 5,240,291 incorporated herein by reference, but which could be, for example, a plurality of raised pad surfaces of a predetermined geometric design believed to be useful for retaining flexible nonmetallic polymer hose (non-rubber) as shown in U.S. Patent 5,393,104 incorporated herein by reference or any other suitable surface) which extends diagonally radially inwardly toward a central axis 28. The retaining surface 20 generally defines an opening 22 to receive an end of the sanitary hose 24.

Within a second end 30 of the cylindrical female coupler piece 12 is a recessed threaded surface 34 of a greater diameter than the diameter of the retaining surface 20 for receiving the intermediate connector 17 therein. It is noted that while the diameter of the surfaces 20 and 34 are shown as differing to create a seat against which the intermediate connector abuts, they could be of the same diameter as illustrated in FIGS. 4 and 5.

A first end 40 of male coupler piece 16 is preferably tapered having a portion 44 of slightly less diameter than the inner diameter of the hose 24 and a portion 46 of slightly larger diameter than the inner diameter of the hose 24. The tapered design of the first end 40 allows for easy acceptance and positioning of the male coupler piece 16 into the inner diameter of the hose 24 while providing radially outward pressure on the inner surface of the hose 24 to lend to the hose retention described below.

The end 40 has an external threaded surface 48. Disposed adjacent to the threaded surface 48 and on a second end 52 of the male coupler piece 16 is a radially extending shoulder 50. The second end 52 is formed in a manner to be readily connected to a fixture used in the sanitary equipment industry. The piece 12 and piece 16 have wrench flats 58 and 60, respectively to enable gripping thereof for assembly and disassembly.

The intermediate connector 17 has a radial diameter slightly less than the distance between the threaded surface 34 and threaded surface 48 and has complementary threaded surfaces 53 and 55, respectively, to threadably interconnect the female and male coupler pieces 12, 16. The intermediate piece 17 should be of sufficient thickness and rigidity to help maintain in the overall integrity of the coupler 10. The end 52 of the intermediate connector 17 has an annular grooved surface 54. The annular grooved surface 54 is shaped to seat a portion of the O-Ring 14.

The intermediate connector 17 is made of a dissimilar material to that of the female coupler piece 12 and male coupler piece 16. The dissimilar material must exhibit anti-galling properties when in contact with at least one of the female and male coupler pieces 12 resp. 16. Suitable dissimilar materials are non-metallic materials, such as rubber or plastic polymer materials with high heat resistance and low adsorption properties or metals with anti-galling properties with respect to the material(s) of the female and male coupling pieces 12 resp. 16. By so providing, the coupler 10 exhibits excellent anti-galling effects. Additionally, the intermediate connector 17 makes for an excellent shock absorber and is easily replaceable if damaged thus increasing the life of the coupler 10 and reducing the need for replacement of the entire male coupler piece 16 and female coupler piece 12. Moreover, when the coupler pieces 12 and 16, connector 17 and O-ring 14 are connected with the female coupler piece 12 inserted onto end 32 of the hose 24 such that the hose end 32 abuts the intermediate connector 17, a sanitary passageway is formed along the axis 28 and which allows for sanitary communication therethrough.

In the assembled form as shown in FIG. 1, the shoulder 50 compresses the O-ring 14 against the end 52. This results in a seal which leaves a small portion 64 of the O-ring 14 protrudingly exposed to provide the benefit of inspectability and prevent bacteria or other contaminants from entering at the junction between male coupler piece 16 and either or both the intermediate piece 17 the female coupler piece 12.

The present invention finds itself particularly well suited for use in transferring products which must remain substantially sanitary. It will be readily apparent to those skilled in the art that the coupler of the present invention can be made in a variety of sizes to accommodate a number of flexible rubber or nonmetallic hoses from a number of manufacturers, e.g., Whiteflexwing® by Goodyear Rubber Company, Akron, Ohio, Foodmaster and Cellarmaster® by Gats Rubber Co., Denver Colo., Transporter ® by H.D.B. Industries, Bellfontaine, Ohio, Series 210 HFG; 212 MK by Kanaflex, Wheeling, IL; Tigerflex by Kuriama, Elkgrove, IL; Spiralite Series #170, Torrance, CA. For example, a standard sanitary end, e.g., Tri-Clamp® by Laddish Co., Wisconsin or I-Line TM and Q-Line by Cherry Burrell, Iowa, may be welded, brazed, or soldered to second end 52. The assembly is then ready to be connected to sanitary equipment like receiving pumps, processing equipment, storage vats, transport trucks, etc.

The coupler is assembled as follows. The intermediate connector 17 is completely threaded to the female coupler piece 12 as shown in FIG. 1 which, in turn, is forcibly pressed onto the hose end 32. The hose 24 is in the correct position when it abuts the intermediate connector 17. Upon the complete insertion of the first end 40 of the male coupler piece 16 into the hose 24, portion 62 of the outer surface of the hose 24 is forced into the grooved area defined by the retaining surface 20 resulting in a slight deformation of the outer surface of the hose 24. The first end 40 not only forces the hose against the surfaces 20 and 48, but also creates sealing interfaces between the female coupler piece 12, the hose end 32, female coupler piece 12, male coupler piece 16 and intermediate connector 17. If using the inner surface described in U.S. Patent 5,393,104, this results in locking the hose 24 within the female coupler piece 12.

Prior to the insertion of male coupler piece 16, the O-ring 14 is placed in the annular groove 54 and maintained therein. Female coupler piece 12 is positioned to receive the first end 40 of the male coupler piece therein, i.e., it is threaded to the intermediate connector 17 and thus drawn into female coupler piece 12. As male coupler piece 16 and the hose 24 is threaded, the shoulder 50 nears and ultimately abuts the O-ring 14. At this point, it is found desirable to further thread male coupler piece 16 until sufficient resistance builds at the interface between the shoulder 50, O-ring 14 and grooved surface 54 to substantially secure male coupler piece 16 in place and prevent rotation and axial movement of male coupler piece 16 with respect to the intermediate connector 17 and female coupler piece 12.

This further threading results in a slight bulging of the O-ring 14 constituting the portion 64. The juncture formed by the interconnection of the shoulder 50, O-ring 14, and grooved surface 54 is found to provide a highly sanitary seal against not only leakage out, but also unwanted entry of bacteria and contaminants therein. The novel combination described above therefore provides the coupler 10 with the unique capability of sanitary transfer of product with improved anti-galling characteristics.

FIG. 4 is a second embodiment which is substantially similar to that previously described. The difference here resides in the radial diameter of the intermediate connector 17, the diameter of the threaded surface 34 and that the grooved surface 54 resides in the female coupler piece 12. Likewise, FIG. 5 shows a third embodiment in which the grooved surface is partially comprised of a surface 54a of the intermediate connector 17 and a surface 54b of the female coupler piece 12.

## Claims

1. A coupler (10) for a flexible non-metallic hose (24) for sanitary use, comprising:
a hollow female coupler piece (12) having a first end (18) and a second end (30), said first end (18) having a surface defining an opening therein to receive an end of said hose (24), said second end (30) having an inner threaded surface (34) defining an opening adjacent and coaxial with said opening of said first end (18) to form a passage-way along a central axis of said female coupler piece (12) allowing communication through said female coupler piece (12);
an intermediate connector (17) having an inner threaded surface portion (55) and an outer threaded surface portion (53), wherein said outer threaded portion (53) is complementary to said inner threaded surface (24) of said second end (30) of said female coupler piece (12); and
a hollow male coupler piece (16) having a first end (40) and a second end (52), said first end (40) having a portion (48) of an outer surface which is threaded in a complementary manner to said inner threaded surface portion (55) of said intermediate connector (17) to allow receipt of said male coupler piece (16) therein and having a portion (46) of said outer surface of a size diameter greater than an inner surface diameter of the hose (24) to force the hose (24) radially outwardly against the inner surface (20) of said first end (18) of said female coupler piece (12);
**characterised in that** one of the surfaces of the first ends includes a retaining surface, that the material composition of said intermediate connector piece (17) exhibits anti-galling properties with respect to the material composition of said female coupler piece (12) and/or said male coupler piece (16); and
that said second end (52) of said male coupler piece (16) has a radially outwardly extending shoulder (50), and which coupling further comprises means (14) for sealing between said shoulder (50) and said intermediate connector (17) and/or that said female coupler piece (12) when said male coupler piece (16) is threadedly interconnected to said female coupler piece (12) by way of said intermediate connector (17) wherein said sealing means (14) acts to aid in securing said male coupler piece (16) in place and prevent rotation and axial movement thereof with respect to said female coupler piece (12) while being visible to confirm the integrity of said sealing means (14).

2. The coupler according to claim 1, **characterised in that** said sealing means (14) is disposed between said shoulder (50) and said intermediate connector (17) in a manner to remain partially visible when connected.

3. A coupler according to claim 2, **characterised in that** said intermediate connector (17) comprises an annular grooved surface (54) therein and said means for sealing comprises an O-ring (14) disposable within said grooved surface (54), wherein a seal is formed by compressing said O-ring (14) in said annular grooved surface (54) in a manner which forces a portion thereof to seat in said annular grooved surface (54) between said intermediate connector (17) and said shoulder (50) of the male coupler piece (16) and forces another portion of said O-ring (14) to protrude outwardly from said coupler (10) in a visible manner.

4. A coupler according to claim 1, **characterised in that** said sealing means (14) is disposed between said shoulder (50) and said second end (30) of said female coupler piece (12) in a manner to remain partially visible when connected.

5. A coupler according to claim 4, **characterised in that** said second end (30) of said female coupler piece (12) comprises an annular grooved surface (54) therein and said means for sealing (14) includes an O-ring (14) disposable within said grooved surface (54), wherein a seal is formed by compressing said O-ring (14) in said annular grooved surface (54) in a manner which forces a portion thereof to seat in said annular grooved surface (54) between said second end (30) of said female coupler piece (12) and said shoulder (50) of male coupler piece (16) and forces another portion of said O-ring (14) to protrude outwardly from said coupler (10) in a visible manner.

6. A coupler according to claim 1, **characterised in that** said sealing means (14) is disposed between said shoulder (50), said intermediate connector (17) and said second end (30) of said female coupler piece (12) in a manner to remain partially visible when connected.

7. A coupler according to claim 6, **characterised in that** said second end (30) of said female coupler piece (12) includes a portion of an annular grooved surface (54b) therein and said intermediate connector (17) includes a portion of an annular grooved surface (54a) therein, wherein when said intermediate connector (17) is threaded to said female coupler piece (12) said grooved portions (54a, 54b) form an annular grooved surface (54a, 54b) and said means for sealing (14) includes an O-ring (14) disposable within said grooved surface (54a, 54b), wherein a seal is formed by compressing said o-ring (14) in said annular grooved surface (54a, 54b) in a manner which forces a portion thereof to seat in said annular grooved surface (54a, 54b) between said intermediate connector (17), said second end (30) of said female coupler piece (12) and said shoulder (50) of the male coupler (16) and forces another portion of said O-ring (14) to protrude outwardly from said coupler (10) in visible manner.

8. A coupler according to any, of the previous claims **characterised in that** the material composition of said intermediate connector piece (17) is a non-metallic material composition, such as a rubber or plastic polymer material composition or a metal with anti-galling properties with respect to the material composition of the female coupler piece (12) and/or the male coupler piece (16).

9. A coupler according to any of the previous claims, **characterised in that** said male coupler piece (16) and said female coupler piece (12) are of a like material composition.

## Patentansprüche

1. Kupplung (10) für einen biegsamen, nichtmetallischen Schlauch (24) für den Sanitäreinsatz, umfassend:
ein hohles, aufnehmendes Kupplungsstück (12) mit einem ersten Ende (18) und einem zweiten Ende (30), wobei das erste Ende (18) eine Oberfläche aufweist, die eine Öffnung darin definiert, um ein Ende des Schlauches (24) aufzunehmen, und das zweite Ende (30) eine innere, mit einem Gewinde versehene Oberfläche (34) aufweist, die eine Öffnung benachbart und koaxial zur Öffnung des ersten Endes (18) definiert, um einen Durchgang entlang einer zentralen Achse des aufnehmenden Kupplungsstücks (12) zu bilden, was die Kommunikation durch das aufnehmende Kupplungsstück (12) erlaubt;
ein Zwischenverbindungsstück (17), das einen Oberflächenabschnitt mit Innengewinde (55) und einen Oberflächenabschnitt mit Außengewinde (53) aufweist, wobei der Oberflächenabschnitt mit Außengewinde (53) komplementär zu der Innengewindeoberfläche (24) des zweiten Endes (30) des aufnehmenden Kupplungsstücks (12) ist; und
einen hohlen Kupplungsstecker (16) mit einem ersten Ende (40) und einem zweiten Ende (52), wobei das erste Ende (40) einen Abschnitt (48) einer äußeren Oberfläche aufweist, der in komplementärer Weise zum Oberflächenabschnitt mit Innengewinde (55) des Zwischenverbindungsstücks (17) mit einem Gewinde versehen ist, um die Aufnahme des Kupplungssteckers (16) darin zu erlauben, und wobei es einen Abschnitt (46) der äußeren Oberfläche mit einer Durchmesserabmessung aufweist, die größer als ein innerer Oberflächendurchmesser des Schlauches (24) ist, um den Schlauch (24) radial nach außen gegen die innere Oberfläche (20) des ersten Endes (18) des aufnehmenden Kupplungsstücks (12) zu zwängen;
**dadurch gekennzeichnet, dass** eine der Oberflächen der ersten Enden eine zurückhaltende Oberfläche umfasst, dass die Materialzusammensetzung des Zwischenverbindungsstücks (17) fressenverhütende Eigenschaften in Bezug auf die Materialzusammensetzung des aufnehmenden Kupplungsstücks (12) und/oder des Kupplungssteckers (16) besitzt; und
dass das zweite Ende (52) des Kupplungssteckers (16) eine sich radial nach außen erstreckende Schulter (50) aufweist, und wobei die Kupplung des Weiteren ein Mittel (14) zur Abdichtung zwischen der Schulter (50) und dem Zwischenverbindungsstück (17) und/oder dem aufnehmenden Kupplungsstück (12) umfasst, wenn der Kupplungsstecker (16) eingeschraubt mit dem aufnehmenden Kupplungsstück (12) mittels des Zwischenverbindungsstücks (17) verbunden ist, wobei das Dichtungsmittel (14) beim Befestigen des Kupplungssteckers (16) an seinem Ort hilft und die Drehung und axiale Bewegung davon in Bezug auf das aufnehmende Kupplungsstück (12) verhindert, während es sichtbar bleibt, um die Unversehrtheit des Dichtungsmittels (14) überprüfbar zu machen.

2. Kupplung gemäß Anspruch 1, **dadurch gekennzeichnet, dass** das Dichtungsmittel (14) zwischen der Schulter (50) und dem Zwischenverbindungsstück (17) in einer Weise angeordnet ist, um teilweise sichtbar zu bleiben, wenn sie verbunden sind.

3. Kupplung gemäß Anspruch 2, **dadurch gekennzeichnet, dass** das Zwischenverbindungsstück (17) eine ringförmig vertiefte Oberfläche (54) umfasst und das Abdichtungsmittel einen O-Ring (14) umfasst, der in der vertieften Oberfläche (54) einsetzbar ist, wobei eine Dichtung durch Zusammendrücken des O-Rings (14) in der ringförmig vertieften Oberfläche (54) auf eine Weise ausgebildet wird, die einen Abschnitt desselben zwingt, sich in die ringförmig vertiefte Oberfläche (54) zwischen dem Zwischenverbindungsstück (17) und der Schulter (50) des Kupplungssteckers (16) einzupassen, und einen anderen Abschnitt des O-Rings (14) zwingt, nach außerhalb der Kupplung (10) in sichtbarer Weise vorzuragen.

4. Kupplung gemäß Anspruch 1, **dadurch gekennzeichnet, dass** das Dichtungsmittel (14) zwischen der Schulter (50) und dem zweiten Ende (30) des aufnehmenden Kupplungsstücks (12) auf eine Weise angeordnet ist, um teilweise sichtbar zu bleiben, wenn sie verbunden sind.

5. Kupplung gemäß Anspruch 4, **dadurch gekennzeichnet, dass** das zweite Ende (30) des aufnehmenden Kupplungsstücks (12) eine ringförmig vertiefte Oberfläche (54) umfasst und das Abdichtungsmittel (14) einen O-Ring (14) umfasst, der in der vertieften Oberfläche (54) einsetzbar ist, wobei eine Dichtung durch Zusammendrücken des O-Rings (14) in der ringförmig vertieften Oberfläche (54) auf eine Weise ausgebildet wird, die einen Abschnitt desselben zwingt, sich in die ringförmig vertiefte Oberfläche (54) zwischen dem zweiten Ende (30) des aufnehmenden Kupplungsstücks (12) und der Schulter (50) des Kupplungssteckers (16) einzupassen, und einen anderen Abschnitt des O-Rings (14) zwingt, nach außerhalb der Kupplung (10) in sichtbarer Weise vorzuragen.

6. Kupplung gemäß Anspruch 1, **dadurch gekennzeichnet, dass** das Dichtungsmittel (14) zwischen der Schulter (50), dem Zwischenverbindungsstück (17) und dem zweiten Ende (30) des aufnehmenden Kupplungsstücks (12) auf eine Weise angeordnet ist, um teilweise sichtbar zu bleiben, wenn sie verbunden sind.

7. Kupplung gemäß Anspruch 6, **dadurch gekennzeichnet, dass** das zweite Ende (30) des aufnehmenden Kupplungsstücks (12) einen Abschnitt einer ringförmig vertieften Oberfläche (54b) umfasst und das Zwischenverbindungsstück (17) einen Abschnitt einer ringförmig vertieften Oberfläche (54a) umfasst, wobei die vertieften Abschnitte (54a, 54b), wenn das Zwischenverbindungsstück (17) in das aufnehmende Kupplungsstück (12) eingeschraubt ist, eine ringförmig vertiefte Oberfläche (54a, 54b) ausbilden, und das Abdichtungsmittel (14) einen O-Ring (14) umfasst, der in die vertiefte Oberfläche (54a, 54b) einsetzbar ist, wobei eine Dichtung durch Zusammendrücken des O-Rings (14) in der ringförmig vertieften Oberfläche (54a, 54b) auf eine Weise ausgebildet wird, die einen Abschnitt desselben zwingt, sich in die ringförmig vertiefte Oberfläche (54a, 54b) zwischen dem Zwischenverbindungsstück (17), dem zweiten Ende (30) des aufnehmenden Kupplungsstücks (12) und der Schulter (50) des Kupplungssteckers (16) einzupassen, und einen anderen Abschnitt des O-Rings (14) zwingt, nach außerhalb der Kupplung (10) in sichtbarer Weise vorzuragen.

8. Kupplung gemäß jedem der vorhergehenden Ansprüche, **dadurch gekennzeichnet, dass** die Materialzusammensetzung des Zwischenverbindungsstücks (17) eine nichtmetallische Materialzusammensetzung ist, wie etwa eine Gummi- oder Kunststoffpolymermaterialzusammensetzung oder ein Metall mit fressenverhütenden Eigenschaften in Bezug auf die Materialzusammensetzung des aufnehmenden Kupplungsstücks (12) und/oder des Kupplungssteckers (16).

9. Kupplung gemäß jedem der vorhergehenden Ansprüche, **dadurch gekennzeichnet, dass** der Kupplungsstecker (16) und das aufnehmende Kupplungsstück (12) aus einer ähnlichen Materialzusammensetzung sind.

## Revendications

1. Raccord (10) pour tuyau flexible non métallique (24) à usage sanitaire, comprenant :
une pièce de raccord femelle creuse (12) ayant une première extrémité (18) et une deuxième extrémité (30), ladite première extrémité (18) ayant une surface définissant en son sein une ouverture pour recevoir une extrémité dudit tuyau (24), ladite deuxième extrémité (30) ayant une surface intérieure filetée (34) définissant une ouverture adjacente et coaxiale à ladite ouverture de ladite première extrémité (18) pour former un passage le long d'un axe central de ladite pièce de raccord femelle (12) permettant une communication via ladite pièce de raccord femelle (12);
un connecteur intermédiaire (17) ayant une portion de surface intérieure filetée (55) et une portion de surface extérieure filetée (53), ladite portion extérieure filetée (53) étant complémentaire à ladite surface intérieure filetée (24) de ladite deuxième extrémité (30) de ladite pièce de raccord femelle (12) ; et
une pièce de raccord mâle creuse (16) ayant une première extrémité (40) et une deuxième extrémité (52), ladite première extrémité (40) ayant une portion (48) d'une surface extérieure qui est filetée de manière complémentaire à ladite portion de surface intérieure filetée (55) dudit connecteur intermédiaire (17) pour permettre la réception de ladite pièce de raccord mâle (16) en son sein et ayant une portion (46) de ladite surface extérieure d'un diamètre supérieur au diamètre de la surface intérieure du tuyau (24) pour forcer le tuyau (24) radialement vers l'extérieur contre la surface intérieure (20) de ladite première extrémité (18) de ladite pièce de raccord femelle (12) ;
**caractérisé en ce que** l'une des surfaces des premières extrémités comprend une surface de rétention, **en ce que** la composition du matériau de ladite pièce de connexion intermédiaire (17) manifeste des propriétés anti-grippage par rapport à la composition du matériau de ladite pièce de raccord femelle (12) et/ou de ladite pièce de raccord mâle (16) ; et
**en ce que** ladite deuxième extrémité (52) de ladite pièce de raccord mâle (16) a un épaulement (50) s'étendant radialement vers l'extérieur, et ledit raccordement comprend un moyen (14) pour assurer l'étanchéité entre ledit épaulement (50) et ledit connecteur intermédiaire (17) et/ou ladite pièce de raccord femelle (12) lorsque ladite pièce de raccord mâle (16) est interconnectée par vissage à ladite pièce de raccord femelle (12) au moyen dudit connecteur intermédiaire (17), ledit moyen d'étanchéité (14) favorisant le maintien en place de ladite pièce de raccord mâle (16) et empêchant la rotation et le mouvement axial de celle-ci par rapport à ladite pièce de raccord femelle (12), tout en étant visible pour confirmer l'intégrité dudit moyen d'étanchéité (14).

2. Raccord selon la revendication 1, **caractérisé en ce que** ledit moyen d'étanchéité (14) est disposé entre ledit épaulement (50) et ledit connecteur intermédiaire (17) de manière à rester partiellement visible lorsqu'il est connecté.

3. Raccord selon la revendication 2, **caractérisé en ce que** ledit connecteur intermédiaire (17) comprend une surface annulaire rainurée (54) et ledit moyen pour assurer l'étanchéité comprend un joint torique (14) pouvant être disposé à l'intérieur de ladite surface rainurée (54), l'étanchéité étant formée par compression dudit joint torique (14) dans ladite surface annulaire rainurée (54) d'une manière telle qu'une portion de celui-ci est contrainte de venir siéger dans ladite surface annulaire rainurée (54) entre ledit connecteur intermédiaire (17) et ledit épaulement (50) de la pièce de raccord mâle (16) et qu'une autre portion dudit joint torique (14) est contrainte de faire saillie vers l'extérieur depuis ledit raccord (10), de manière visible.

4. Raccord selon la revendication 1, **caractérisé en ce que** ledit moyen d'étanchéité (14) est disposé entre ledit épaulement (50) et ladite deuxième extrémité (30) de ladite pièce de raccord femelle (12) d'une manière telle qu'il reste partiellement visible, à l'état connecté.

5. Raccord selon la revendication 4, **caractérisé en ce que** ladite deuxième extrémité (30) de ladite pièce de raccord femelle (12) comprend une surface annulaire rainurée (54) et ledit moyen pour assurer l'étanchéité (14) comprend un joint torique (14) pouvant être disposé dans ladite surface rainurée (54), l'étanchéité étant formée par compression dudit joint torique (14) dans ladite surface annulaire rainurée (54) d'une manière telle qu'une portion de celui-ci est contrainte de siéger dans ladite surface annulaire rainurée (54) entre ladite deuxième extrémité (30) de ladite pièce de raccord femelle (12) et ledit épaulement (50) de la pièce de raccord mâle (16) et qu'une autre portion dudit joint torique (14) est contrainte de faire saillie vers l'extérieur depuis ledit raccord (10), de manière visible.

6. Raccord selon la revendication 1, **caractérisé en ce que** ledit moyen d'étanchéité (14) est disposé entre ledit épaulement (50), ledit connecteur intermédiaire (17) et ladite deuxième extrémité (30) de ladite pièce de raccord femelle (12) d'une manière telle qu'il reste partiellement visible, à l'état connecté.

7. Raccord selon la revendication 6, **caractérisé en ce que** ladite deuxième extrémité (30) de ladite pièce de raccord femelle (12) comprend une portion de surface annulaire rainurée (54b) et ledit connecteur intermédiaire (17) comprend une portion de surface annulaire rainurée (54a), raccord dans lequel, lorsque ledit connecteur intermédiaire (17) est vissé à ladite pièce de raccord femelle (12), lesdites portions rainurées (54a, 54b) forment une surface annulaire rainurée (54a, 54b) et ledit moyen pour assurer l'étanchéité (14) comprend un joint torique (14) pouvant être disposé dans ladite surface rainurée (54a, 54b), l'étanchéité étant formée par compression dudit joint torique (14) dans ladite surface annulaire rainurée (54a, 54b) d'une manière telle qu'une portion de celui-ci est contrainte de venir siéger dans ladite surface annulaire rainurée (54a, 54b) entre ledit connecteur intermédiaire (17), ladite deuxième extrémité (30) de ladite pièce de raccord femelle (12) et ledit épaulement (50) du raccord mâle (16) et qu'une autre portion dudit joint torique (14) est contrainte de faire saillie vers l'extérieur à partir dudit raccord (10), de manière visible.

8. Raccord selon l'une quelconque des revendications précédentes, **caractérisé en ce que** la composition du matériau de ladite pièce de connexion intermédiaire (17) est une composition de matériau non métallique, telle qu'une composition d'un matériau de caoutchouc ou d'un polymère plastique ou d'un métal ayant des propriétés anti-grippage par rapport à la composition du matériau de la pièce de raccord femelle (12) et/ou de la pièce de raccord mâle (16).

9. Raccord selon l'une quelconque des revendications précédentes, **caractérisé en ce que** ladite pièce de raccord mâle (16) et ladite pièce de raccord femelle (12) sont d'une composition de matériau semblable.
